# EUROPEAN PATENT SPECIFICATION

(11) **EP 2 280 162 B1**
(45) Date of publication and mention of the grant of the patent: **30.10.2013**
(21) Application number: 10170000.3
(22) Date of filing: 19.07.2010
(51) Int. Cl.: F02N 11/08

(54) **Engine start control system**
Motorstart-Steuerungssystem
Système de contrôle du démarrage de moteur

(30) Priority: 21.07.2009 JP 2009170032
(43) Date of publication of application: 02.02.2011
(73) Proprietor: Honda Motor Co., Ltd., Tokyo 107-8556 (JP)
(72) Inventor: Osawa, Toshifumi, Saitama 351-0193 (JP); Nagatsuyu, Toshiya, Saitama 351-0193 (JP); Ogiya, Kanichiro, Saitama 351-0193 (JP)
(74) Representative: Beder, Jens

(56) References cited:
- EP-A2- 1 357 286
- EP-A2- 1 365 145
- EP-A2- 1 406 010
- EP-A2- 1 939 444
- FR-A1- 2 918 127

## Description

The present invention relates to engine start control systems and more particularly to an engine start control system which reverse-rotationally drives a crankshaft to a predetermined position immediately after an engine has been stopped.

There has heretofore been known idle stop (idling stop) control in which at the time of temporary stop such as waiting at stoplights and upon establishment of predetermined conditions, an engine is temporarily stopped and thereafter is restarted in response to throttle operation to restart moving. At the time of temporarily stopping the engine by this idle stop control, "rewinding control" may sometimes be exercised in which a crankshaft is reverse-rotationally driven to a predetermined position immediately after the engine stop in order to improve startability. However, an appropriate position to stop the reverse-rotational drive is immediately rearward of compression top dead center. Therefore, because of "swing-back," it is difficult to stop the crankshaft at the appropriate position only by cutting electricity to an ACG starter motor along with detection of the predetermined position. The "swing-back" is such that a piston is pushed back by compression reactive force to drive the crankshaft in a normal-rotational direction.

Japanese Patent No. 3,969,641 discloses the following technology. In rewinding control at the time of stopping an engine by idle stop control, when it is detected that a crankshaft is rewound to a predetermined position immediately rearward of compression top dead center, reverse-rotational drive is executed at a second duty ratio set to a value smaller than that of a first duty ratio applied to the rewinding control. This reduces an amount of displacement in the normal-rotational direction due to "swing-back."

In the engine start control system described in Patent Document 1, however, it is necessary to make small the second duty ratio applied to the reverse-rotational drive to reduce the swing-back, to a degree not to get over the compression top dead center. There is a possibility that the period of time from the convergence of "the swing-back" to the complete stop of the crankshaft tends to elongate. If the first duty ratio applied to the rewinding control is increased to increase the speed of reverse-rotational drive, in accordance with this "the swing-back" resulting from the compression reactive force is increased. Consequently, there arises a problem in that it is difficult to shorten the time taken to complete the rewinding control.

Document EP 1 365 145 A2 shows an engine starting apparatus according to the describing portion of claims 1 and 2.

It is an object of the present invention to solve the problem of the conventional technology and to shorten an amount of time taken to complete rewinding control at the time of moving into idle stop control.

To achieve the above object, the present invention is firstly characterized by, in an engine start control system (80) in which idle stop control is exercised to automatically stop an engine (E) based on establishment of a predetermined condition and after the stop of the engine (E) a crankshaft (51) is reverse-rotationally driven to a predetermined position, by a motor (70) for normal-rotational or reverse-rotational drive, including: an idle stop start-time rewinding control unit (100) exercising rewinding control in which immediately after the engine stop by the idle stop control, rewinding control is exercised to reverse-rotationally drive the crankshaft (51) to a predetermined position. The idle stop start-time rewinding control unit (100) includes reverse-rotational drive control means (101) for reverse-rotationally driving the motor (70) at a rewinding control duty ratio immediately after the engine stop; reverse-rotation stop condition determination means (103) for detecting the fact that the crankshaft (51) is rewound to the predetermined position by the reverse-rotational drive; and motor brake means (104) for applying a braking force (in the following also referred to as motor brake) to the crankshaft (51) by reverse-rotationally driving the motor (70) when it is detected that the crankshaft (51) is rewound to the predetermined position. The motor brake means (104) is configured to apply the motor brake stepwise. The engine start control system (80) further comprises a motor angle sensor (29) for detecting an rotation angle of the motor (70). The reverse-rotation stop condition determination means (103) determines that the crankshaft (51) is rewound to the predetermined position if a currently measured passage time reaches a value not less than a predetermined multiplied value of an immediately previously measured passage time on the basis of a time at which a predetermined rotation angle detected by the motor angle sensor (29) passes. A duty ratio applied to the braking force is set to a value smaller than the rewinding control duty ratio, and the motor brake means (104) applies the braking force stepwise by use of a plurality of different duty ratios.

To achieve the above object, the present invention is secondly characterized by, in an engine start control system (80) in which idle stop control is exercised to automatically stop an engine (E) based on establishment of a predetermined condition and after the stop of the engine (E) a crankshaft (51) is reverse-rotationally driven to a predetermined position, by a motor (70) for normal-rotational or reverse-rotational drive, including: an idle stop start-time rewinding control unit (100) exercising rewinding control in which immediately after the engine stop by the idle stop control, rewinding control is exercised to reverse-rotationally drive the crankshaft (51) to a predetermined position. The idle stop start-time rewinding control unit (100) includes reverse-rotational drive control means (101) for reverse-rotationally driving the motor (70) at a rewinding control duty ratio immediately after the engine stop; reverse-rotation stop condition determination means (103) for detecting the fact that the crankshaft (51) is rewound to the predetermined position by the reverse-rotational drive; and motor brake means (104) for applying a braking force (in the following also referred to as motor brake) to the crankshaft (51) by reverse-rotationally driving the motor (70) when it is detected that the crankshaft (51) is rewound to the predetermined position. The motor brake means (104) is configured to apply the motor brake stepwise. The engine start control system (80) further comprises a motor angle sensor (29) for detecting an rotation angle of the motor (70). The reverse-rotation stop condition determination means (103) determines that the crankshaft (51) is rewound to the predetermined position if it is determined that the crankshaft (51) turns into normal-rotation from reverse-rotation on the basis of a passage state of a predetermined rotation angle detected by the motor angle sensor (29). A duty ratio applied to the braking force is set to a value smaller than the rewinding control duty ratio, and the motor brake means (104) applies the braking force stepwise by use of a plurality of different duty ratios.

The invention is thirdly characterized in that the motor brake means (104) applies the braking force stepwise while reducing the plurality of different duty ratios stepwise.

The invention is fourthly characterized in that the motor brake means applies the braking force stepwise by use of a first duty ratio and a second duty ratio smaller than the first duty ratio.

The invention is fifthly characterized in that the motor brake means (104) continues the braking force at the first duty ratio for a first predetermined period of time (T1) and thereafter continues the braking force at the second duty ratio for a second predetermined period of time (T2).

The invention is sixthly characterized by including a throttle opening degree sensor (23) for detecting a throttle opening degree; in that the rewinding control involves the reverse-rotational drive and the braking force; and in that the idle stop start-time rewinding control unit (100) restarts the engine if an output value of the throttle opening degree sensor exceeds a predetermined value during the idle stop control, and even during the application of the braking force, starts the normal-rotational drive of the motor (70) to restart the engine (E) if an output value of the throttle opening degree sensor (23) exceeds a predetermined value.

The invention is seventhly characterized in that even during the execution of the reverse-rotational drive, the idle stop start-time rewinding control unit (100) stops the reverse-rotational drive and starts normal-rotational drive of the motor (70) to restart the engine (E) if rotation speed of the crankshaft (51) exceeds a first predetermined value and an output value of the throttle opening degree sensor (23) exceeds a second predetermined value.

According to the first characteristic, the idle stop start-time rewinding control unit is configured to include the reverse-rotational drive control means for reverse-rotationally driving the motor at a rewinding control duty ratio immediately after the engine stop; the reverse-rotation stop condition determination means for detecting the fact that the crankshaft is rewound to the predetermined position by the reverse-rotational drive, and the motor brake means for applying a braking force to the crankshaft by reverse-rotationally driving the motor when it is detected that the crankshaft is rewound to the predetermined position, and is configured such that the motor brake means is configured to apply the braking force stepwise. Even if "swing-back" occurs in which during reverse-rotational drive, the piston is pushed back by compression reactive force to rotate the crankshaft in the normal-rotational direction, the crankshaft is prevented by the braking force from being moved in the normal-rotational direction. Thus, it is possible to allow the "swing-back" to converge in a short time and stop the crankshaft at an appropriate position.

Further, the motor angle sensor for detecting an rotation angle of the motor is provided and the reverse-rotation stop condition determination means determines that the crankshaft is rewound to the predetermined position if a currently measured passage time reaches a value not less than a predetermined multiplied value of an immediately previously measured passage time on the basis of a time at which a predetermined rotation angle detected by the motor angle sensor passes. Thus, it is possible to detect the fact that the crankshaft is rewound to the predetermined position on the basis of lowering of reverse-rotational drive speed resulting from the compression reactive force. In addition, it is possible to easily vary the position where the reverse-rotational drive is stopped in accordance with the specifications and the like of the engine.

Moreover, the duty ratio applied to the braking force is set to a value smaller than the rewinding control duty ratio, and the motor brake means applies the braking force stepwise by use of a plurality of different duty ratios. Thus, it is possible to exercise the precise stepwise control on the braking force.

According to the second characteristic, the idle stop start-time rewinding control unit is configured to include the reverse-rotational drive control means for reverse-rotationally driving the motor at a rewinding control duty ratio immediately after the engine stop; the reverse-rotation stop condition determination means for detecting the fact that the crankshaft is rewound to the predetermined position by the reverse-rotational drive, and the motor brake means for applying a braking force to the crankshaft by reverse-rotationally driving the motor when it is detected that the crankshaft is rewound to the predetermined position, and is configured such that the motor brake means is configured to apply the braking force stepwise. Even if "swing-back" occurs in which during reverse-rotational drive, the piston is pushed back by compression reactive force to rotate the crankshaft in the normal-rotational direction, the crankshaft is prevented by the braking force from being moved in the normal-rotational direction. Thus, it is possible to allow the "swing-back" to converge in a short time and stop the crankshaft at an appropriate position.

Further, the motor angle sensor for detecting an rotation angle of the motor is provided and the reverse-rotation stop condition determination means determines that the crankshaft is rewound to the predetermined position if it is determined that the crankshaft is turned into normal-rotation from reverse-rotation on the basis of a passage state of a predetermined rotation angle detected by the motor angle sensor. Thus, it is easily detected that the crankshaft is rewound to the predetermined position.

Moreover, the duty ratio applied to the braking force is set to a value smaller than the rewinding control duty ratio, and the motor brake means applies the braking force stepwise by use of a plurality of different duty ratios. Thus, it is possible to exercise the precise stepwise control on the braking force.

According to the third characteristic, the motor brake means applies the braking force stepwise while reducing the plurality of different duty ratios stepwise. Therefore, since the braking force is applied first strong and gradually weakly, the normal-rotation is suppressed by the strong braking force immediately after the start of "the swing-back" and for a period of large rotational torque in the normal-rotational direction and thereafter the occurrence of compression reactive force can be suppressed by weak braking force. Thus, it is possible to allow "the swing-back" during the reverse-rotational drive to converge in a short time.

According to the fourth characteristic, the motor brake means applies the braking force stepwise by use of a first duty ratio and a second duty ratio smaller than the first duty ratio. Therefore, the accuracy of the motor brake control can be enhanced.

According to the fifth characteristic, the motor brake means continues the braking force at the first duty ratio for a first predetermined period of time and thereafter continues it at the second duty ratio for a second predetermined period of time. Therefore, the accuracy of the motor brake control can be more enhanced.

According to the sixth characteristic, the throttle opening degree sensor for detecting a throttle opening degree is provided, the rewinding control involves the reverse-rotational drive and the motor brake or braking force, the idle stop start-time rewinding control unit restarts the engine if an output value of the throttle opening degree sensor exceeds a predetermined value during the idle stop control, and even during the application of the braking force, starts the normal-rotational drive of the motor to restart the engine if an output value of the throttle opening degree sensor exceeds a predetermined value. Therefore, if the throttle operation is performed during the rewinding control, timing to start the normal-rotation can be advanced compared with, for example, setting in which reverse-rotation is switched to normal-rotation after waiting for the completion of the braking force. Thus, it is possible to shorten the period of time from the start of the throttle operation to the restart of the engine.

According to the seventh characteristic, even during the execution of the reverse-rotational drive, the idle stop start-time rewinding control unit stops the reverse-rotational drive and starts normal-rotational drive of the motor to restart the engine if rotation speed of the crankshaft exceeds a first predetermined value and an output value of the throttle opening degree sensor exceeds a second predetermined value. Thus, in the case where the throttle operation is performed during the rewinding control, timing to start the normal-rotation can significantly be advanced compared with, e.g., setting in which the reverse-rotation is switched to the normal-rotation after waiting for the completion of the reverse-rotational drive and of the motor brake or braking force.
Fig. 1 is a lateral view of a scooter-type motorcycle to which an engine start control system according to an embodiment of the present invention is applied.
Fig. 2 is a cross-sectional view taken along line A-A of Fig. 1.
Fig. 3 is a block diagram of a control system of an ACG starter motor.
Fig. 4 is a front view of a motor angle sensor.
Fig. 5 is a diagram illustrating pulse signals detected by the motor angle sensor.
Fig. 6 is a block diagram illustrating a configuration of a major portion in an ECU relating to ACG starter motor drive control.
Fig. 7 is a time chart illustrating a flow of idle stop start-time rewinding control.
Fig. 8 is a flowchart illustrating a procedure for the idle stop start-time rewinding control.
Fig. 9 is a flowchart illustrating a specific procedure for rewinding processing.
Fig. 10 is a flowchart illustrating a procedure in which a reverse-rotation-time compression detection condition 1 is satisfied.
Fig. 11 is a flowchart illustrating a procedure in which a reverse-rotation-time compression detection condition 2 is satisfied.
Fig. 12 is a flowchart illustrating a procedure for reverse-rotational drive-time duty determination processing.
Fig. 13 is a flowchart illustrating details of idle stop winding-time duty selection processing.
Fig. 14 is a flowchart illustrating a procedure for swing-back-time brake processing.
Fig. 15 is a flowchart illustrating a procedure for idle stop-present engine stop mode processing.

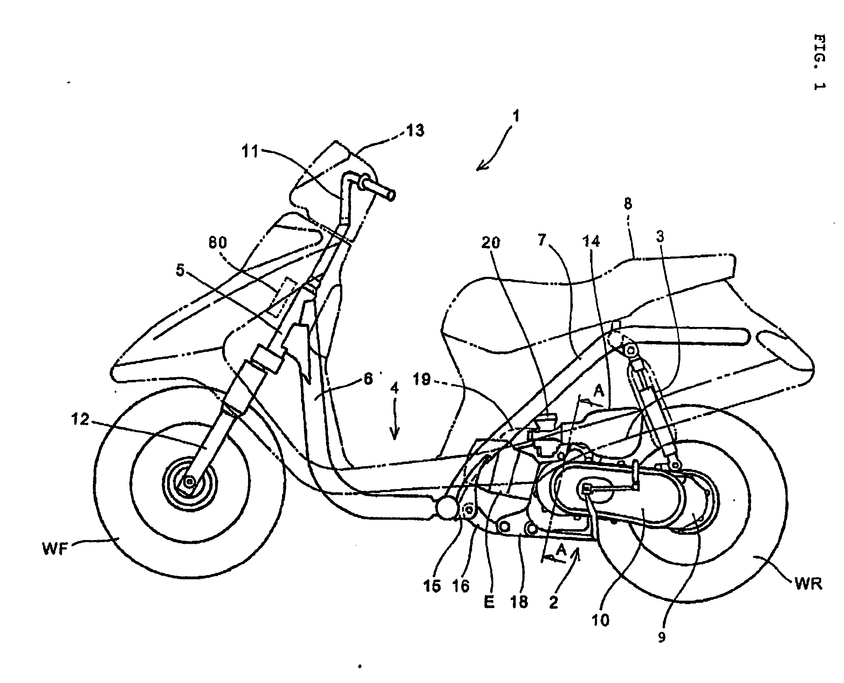

Preferred embodiments of the present invention will hereinafter be described in detail with reference to the drawings. Fig. 1 is a lateral view of a scooter-type motorcycle 1 to which an engine start control system according to an embodiment of the invention is applied. A front portion of a vehicle body is connected to a rear portion of the vehicle body via a low-floor portion 4. A body frame is mainly composed of a down tube 6 and a main pipe 7. A seat 8 is disposed above the main pipe 7.

A handlebar 11 is pivotally supported by a head pipe 5 and extends upward therefrom. A front fork 12 rotatably supporting a front wheel WF is joined to a lower side of the head pipe 5. A handlebar cover 13 also serving as an instrumental panel is attached to the upper portion of the handlebar 11. An ECU 80 serving as an engine start control system is disposed forward of the head pipe 5.

A bracket 15 is provided at a rear end of the down tube 6 and at an erecting portion of the main pipe 7 so as to project therefrom. A hunger bracket 18 of a swing unit 2 is swingably supported by the bracket 15 via a link member 16.

A four-cycle single-cylinder engine E is disposed in a front portion of the swing unit 2. A continuously variable transmission 10 is disposed rearward of the engine E. A rear wheel WR is rotatably supported by an output shaft of a speed-reduction mechanism 9. A rear cushion unit 3 is interposed between the upper end of the speed-reduction mechanism 9 and a bent portion of the main pipe 7. A throttle body 20 of a fuel injection unit connected to an intake pipe 19 extending from the engine E and an air cleaner 14 are arranged above the swing unit 2.

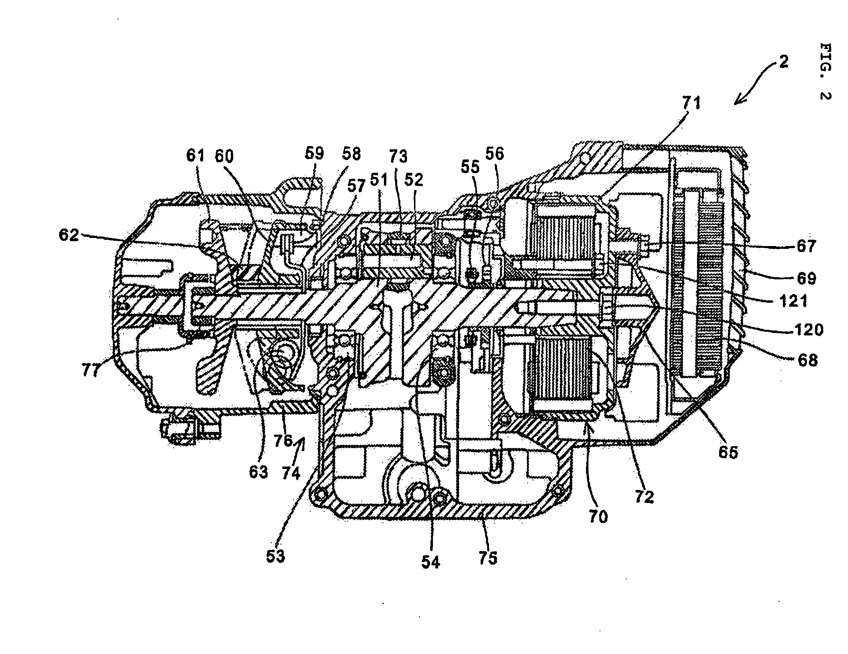

Fig. 2 is a cross-sectional view taken along line A-A of Fig. 1. The swing unit 2 has a crankcase 74 composed of a right case 75 on the vehicle-widthwise right and a left case 76 on the vehicle-widthwise left. A crankshaft 51 is rotatably supported by bearings 53, 54 secured to the crankcase 70. A connecting rod 73 is connected to a crankshaft 51 via a crankpin 52.

The left case 76 also serves as a speed-change chamber case. A belt drive pulley composed of a movable-side pulley half body 60 and a fixed-side pulley half body 61 is mounted to a left end portion of the crankshaft 51. The fixed-side pulley half body 61 is fastened to a left end portion of the crankshaft 51 by means of a nut 77. The movable-side pulley half body 60 is spline fitted to the crankshaft 51 so as to be axially slidable. A V-belt 62 is wound between both the pulley half bodies 60, 61.

A ramp plate 57 is secured to the crankshaft 51 on the right side of the movable-side pulley half body 60. A slide piece 58 is attached to an outer circumferential end portion of the ramp plate 57. This slide piece 58 is engaged with a ramp plate slide boss portion 59 axially formed at an outer circumferential end of the movable-side pulley half body 60. A taper surface is formed on the outer circumferential portion of the ramp plate 57 so as to slant toward the movable-side pulley half body 60 as it goes toward the radial outside. A plurality of weight rollers 63 are received between the taper surface and the movable-side pulley half body 60.

As the rotational speed of the crankshaft 51 is increased, the weight rollers 63 are moved radially outwardly by a centrifugal force. This allows the movable-side pulley half body 60 to move leftward in the figure and come close to the fixed-side pulley half body 61. Consequently, the V-belt 62 sandwiched between both the pulley half bodies 60, 61 is moved radially outwardly to increase the winding diameter. A driven pulley (not illustrated) which varies the winding diameter of the V-belt 62 in response to both the pulley half bodies 60, 61 is provided on the rear side of the swing unit 2. The drive force of the engine E is automatically adjusted by the belt transmission mechanism and is transmitted to the rear wheel WR via a centrifugal clutch not illustrated and the speed-reduction mechanism 9 (see Fig. 1).

An ACG starter motor 70 combining a starter motor with an AC generator is disposed inside the right case 75. The ACG starter motor 70 includes an outer rotor 71 secured to a distal taper portion of the crankshaft 51 by means of attachment bolts 120 and a stator 72 disposed inside the outer rotor 71 and secured to the right case 75 by means of attachment bolts 121. A radiator 68 and a cover member 69 formed with a plurality of slits are mounted on the right side, in the figure, of a blast fan 65 secured to the outer rotor 71 by means of attachment bolts 67.

A sprocket 55 is secured to the crankshaft 51 between the ACG starter motor 70 and the bearing 54. A cam chain is wound around the sprocket 55 to drive a camshaft not illustrated. The sprocket 55 is formed integrally with a gear 56 adapted to transmit power to an oil pump (not illustrated) circulating engine oil.

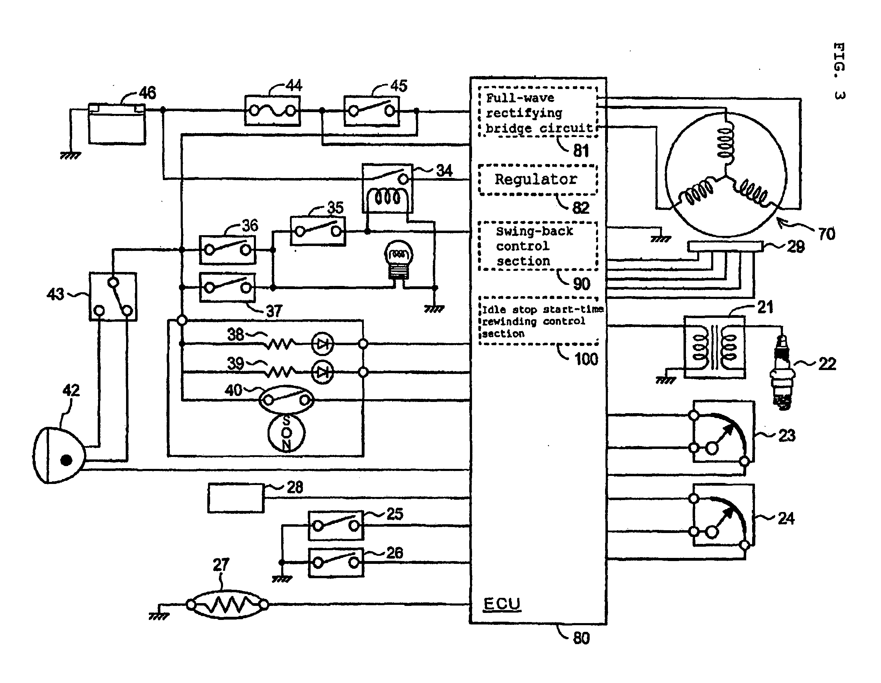

Fig. 3 is a block diagram of a control system of the ACG starter motor 70. The same reference numerals as in the foregoing denote like or corresponding portions. The ECU 80 includes a full-wave rectifying bridge circuit 81 for full-wave rectifying three-phase alternate current of the ACG starter motor 70; a regulator 82 for limiting the output of the full-wave rectifying bridge circuit 81 to a planed regulator voltage (regulator operating voltage: e.g. 14.5 V); a swing-back control unit 90 for reversely rotating the crankshaft 51 to a predetermined position at the time of starting engine; and an idle stop start-time rewinding control unit 100 for reversely rotating the crankshaft 51 to a predetermined position at the time of starting idle stop.

A fuel injection device 28, a motor angle sensor 29, an ignition coil 21, a throttle opening degree sensor 23, a fuel sensor 24, a seat switch 25 detecting a sitting state of an occupant, an idle stop control permission switch 26, a cooling water temperature sensor 27 and an ignition pulser 30 are connected to the ECU 80. Detection signals are supplied from such parts to the ECU 80. An ignition plug 22 is connected to the secondary side of the ignition plug 22.

Further, a starter relay 34, a starter switch 35, stop switches 36, 37, a standby indicator 38, a fuel indicator 39, a vehicle-speed sensor 40 and a headlight 42 are connected to the ECU 80. The headlight 42 is provided with a dimmer switch 43. Electric power is supplied from a buttery 46 to the above-mentioned parts via a main fuse 44 and a main switch 45.

The ECU (the engine start control system) 80 according to the present embodiment can exercise "engine start-time swing-back control." In this engine start-time swing-back control, when the engine E is started up by operating the starter switch 35 (see Fig. 3) from the state where the engine E is at rest, the crankshaft 51 is once reversed, i.e., swung back to a predetermined position and then started to be normal-rotated. This elongates a runup period to compression top dead center to thereby increase the rotational speed of the crankshaft 51 in first getting over the compression top dead center. This engine start-time swing-back control can enhance startability encountered when the engine is started up by the starter switch 35.

Additionally, the ECU 80 can exercise idle stop control in which the engine can once be stopped when predetermined conditions are satisfied at the time of temporary stop such as waiting at stoplights or the like.

For example, the predetermined conditions are as below. A given period of time elapses in the state where the idle stop control permission switch 26 is turned on; the sitting of an occupant is detected by the seat switch 35; a vehicle speed detected by the vehicle speed sensor 40 is equal to or lower than a given value (e.g. 5 km/h); engine speed detected by the ignition pulser 30 is equal to or lower than a given value (e.g. 2000 rpm); and throttle opening degree detected by the throttle opening degree sensor 23 is equal to or lower than a given value (e.g. 5 degrees). If the throttle opening degree becomes the given value or more in the idle stop control, the ECU 80 normal-rotationally drives the ACG starter motor 70 to restart the engine E.

Further, the ECU 80 is configured to be able to exercise "idle stop start-time rewinding control" in which when the above-mentioned idle stop conditions are satisfied and the engine E is once stopped, the crankshaft 51 is reversed, i.e., rewound to a predetermined position from a position where the crankshaft 51 is stopped. The rewinding control can enhance startability by elongating the runup period to the compression top dead center also when the throttle opening degree becomes the predetermined value or more and the engine is restarted. However, the rewinding control is not exercised when the main switch 35 is turned off to stop the engine E.

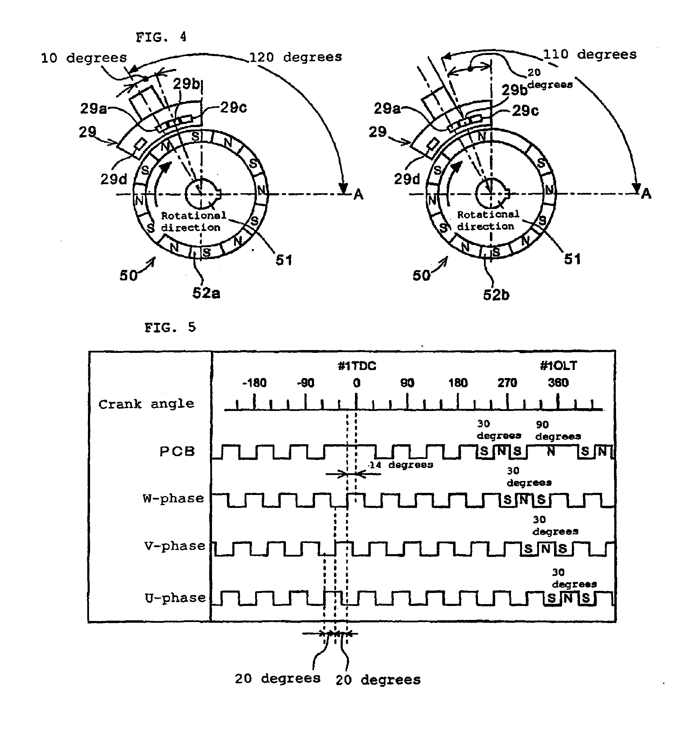

Fig. 4 is a front view of the motor angle sensor 29. Fig. 5 is a diagram illustrating pulse signals detected by the motor angle sensor 29. A rotor 50 secured to the crankshaft for synchronous rotation is configured such that a first magnet rotor 52a is superimposed on a second magnet rotor 52b. The first magnet rotor 52a has twelve magnets in total circularly arranged to output a 30-degree-width signal at 30-degree intervals. The second magnet rotor 52b has a 90-degree-width magnet (the others are arranged at 30-degree intervals) located at only one position to fix the reference position of the rotor 50.

The motor angle sensor 29 is provided with a U-phase hole IC 29C, a V-phase hole IC 29d and a W-phase hole IC 29a adapted to detect U, V and W phases, respectively, by means of the first magnet rotor 52a, and with a PCB hole IC 29b adapted to detect output pulses including a tooth-missing portion by means of the second magnet rotor 52b. The hole ICs 29a, 29c, 29d are arranged so that the W-phase, the U-phase and the V-phase are offset from one another every 10 degrees. In this way, the rotational angle of the crankshaft 51 can be detected every 10 degrees. The W-phase hole IC 29a is disposed at a position turned counterclockwise by 120 degrees from the reference angle A illustrated in the figure and reversely turned by 10 degrees from the location of the PCB hole IC 29b. The PCB hole IC 29b is disposed at a position reversely turned by 20 degrees from a vertical reference line illustrated in the figure (the position turned counterclockwise by 110 degrees from the reference angle A illustrated in the figure).

With reference to Fig. 5, it is set that the tooth-missing portion of the second magnet rotor 52b and the rotor output of the W-phase (a projecting portion of a pulse signal) overlap the position of the top dead center (TDC: compression top dead center and OLT: overlap top) of the piston. Thus, the output of the W-phase becomes a criterion to detect a crank rotation angle. A rising portion of a pulse signal of the W-phase overlapping the position of top dead center is set at a position reversely offset by 14 degrees from top dead center (0 degrees and 360 degrees in crank angle).

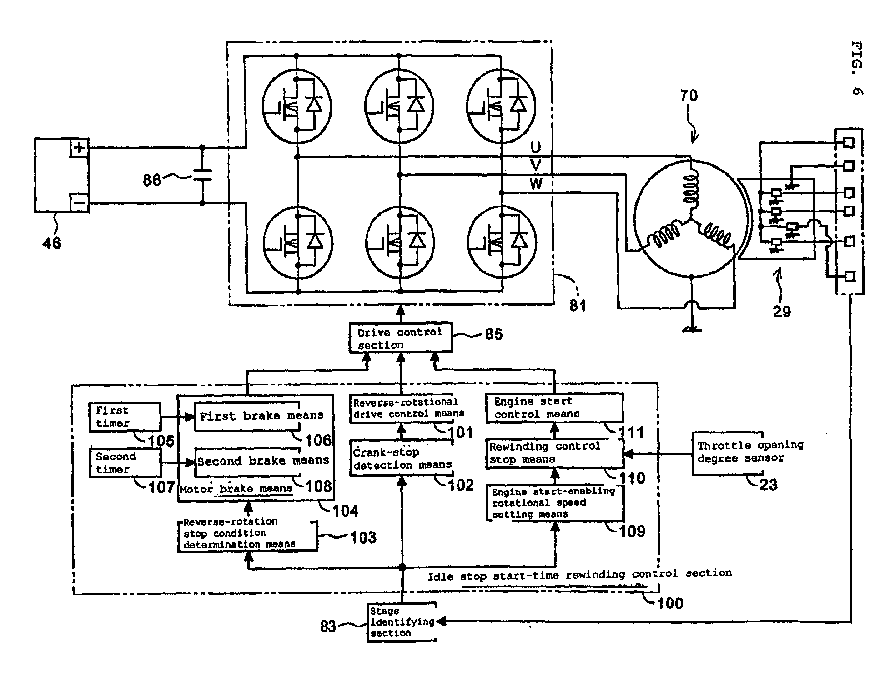

Fig. 6 is a block diagram illustrating a configuration of a major portion in the ECU 80 relating to the drive control of the ACG starter motor 70. The full-wave rectifying bridge circuit 81 is configured such that three sets of two power FETs connected in series to each other are connected in parallel to one another. A smoothing condenser 86 is disposed between the battery 46 and the full-wave rectifying bridge circuit 81.

A stage identifying unit 83 divides two rotations of the crankshaft 51 into 72 stages (720-degree motor stage) of stages #0 through 71 and indentifies a current stage on the basis of the output signals of the motor angle sensor 29. Incidentally, the stage identification is performed by a 360-degree motor stage in which one rotation of the crankshaft 61 is divided into 36 stages of stages #0 to 35, during the period from the start-up of the engine to the completion of stroke identification (dual determination of two rotations of the crankshaft) based on the output value of a PB sensor.

Incidentally, a control signal from the swing-back control unit 90 described earlier is supplied to the drive control unit 85 driving the full-wave rectifying circuit 81. However, the figure depicts only the idle stop start-time rewinding control unit 100 because the idle stop start-time rewinding control relating to the present invention is described in detail.

The engine E may be started by operating the starter switch 35, i.e., started from the complete stop state. In such a case, the drive control unit 85 supplies a drive pulse of a swing-back reverse-rotation duty ratio (e.g. 100%) set by the swing-back control unit 90 to the power FETs of the full-wave rectifying bridge circuit 81 for reversely rotating the ACG starter motor 70. On the other hand, the engine E may be restarted by throttle operation from the idle stop state. In such a case, the drive control unit 85 supplies a drive pulse of a rewinding reverse-rotation duty ratio (e.g. 100%, such a ratio may be also between 90% and 100%) set by the idle stop start-time rewinding control unit 100 to the power FETs of the full-wave rectifying bridge circuit 81 for reversely rotating the ACG starter motor 70.

The idle stop start-time rewinding control unit 100 is provided with reverse-rotational drive control means 101 and crank-stop detection means 102. The crank-stop detection means 102 detects the fact that the rotation of the crankshaft is stopped when the idle stop conditions are satisfied and the engine is to be stopped. The reverse-rotational drive control means 102 issues a reverse-rotational drive command based on the rewinding reverse-rotation duty ratio to the drive control unit 85 along with the stop detected by the crank-stop detection means 102.

The idle stop start-time rewinding control unit 100 is provided with reverse-rotation stop condition determination means 103 and motor brake means 104. The motor brake means 104 includes first brake means 106 and second brake means 108. An output signal of the first timer 105 is supplied to the first brake means 106. An output signal of the second timer 107 is supplied to the second brake means 108.

The reverse-rotation stop condition determination means 103 determines whether or not the reverse-rotation stop condition is satisfied during the implementation of the rewinding control based on the rewinding reverse-rotation duty ratio. The reverse-rotation stop condition is a condition used to determine whether or not the crankshaft is rewound to a predetermined position suitable for restart. In the present embodiment, the condition corresponds to the fact that a compression reactive force which is increased as the compression top dead center is approached pushes back the piston so that the crankshaft is turned into from reverse-rotation to normal-rotation. Incidentally, the reverse-rotation stop condition may be set such that the compression reactive force brings reverse-rotational drive speed to below a given value.

As described above, during the idle stop start-time rewinding control, "swing-back" occurs in which as the crankshaft 51 approaches the compression top dead center, the compression reactive force of the piston is increased to push back the piston so that the crankshaft is rotated in the normal-rotational direction. The motor bake means 104 has a capability to apply a braking force to the crankshaft and stop it at an appropriate position by driving the ACG starter motor 70 at a predetermined reverse-rotation duty ratio in order to reduce the amount of displacement in the normal-rotational direction resulting from "the swing-back."

In particular, the engine start control system according to the present embodiment is **characterized in that** the motor brake control at the time of "the swing-back" is exercised at the two kinds of duty ratios. Specifically, the first brake means 106 executes reverse-rotational drive at a first brake duty ratio (e.g. 70%) for a first predetermined period of time (T1) measured by the first timer 105. Subsequently, the second brake means 108 executes the reverse-rotational drive at a second brake duty ratio (e.g. 20%) for a second predetermined period of time (T2) measured by the second timer 107. Incidentally, the first and second predetermined period of times may be measured by a single timer.

Although details will be described later, this two-stage motor brake control can stop the crankshaft at an appropriate position in a short time even in the case where "the swing-back" is large. It is possible, therefore, to shorten the time taken to complete the rewinding control by setting the rewinding reverse-rotation duty ratio at a large value to increase reverse-rotation speed.

Further, the idle stop start-time rewinding control unit 100 includes engine start-enabling rotational speed setting means 109, rewinding control stop means 110 and engine start control means 111. In the present embodiment, even during the reverse-rotational drive at the rewinding reverse-rotation duty ratio, if it is detected that the reverse-rotation speed falls below the predetermined value and the throttle opening degree is not less than a predetermined value, the rewinding control is stopped and switched to the normal-rotational drive to start the engine. The engine start-enabling rotational speed setting means 109 sets a predetermined value of reverse-rotation speed (e.g. - 100 rpm), which is one of permission conditions for switching to such normal-rotational drive.

During the reverse-rotational drive based on the rewinding reverse-rotation duty ratio, the reverse-rotation speed may fall below a predetermined speed due to the compression reactive force and the throttle opening degree may become not less than the predetermined value. In such a case, the rewinding control stop means 110 stops the rewinding control and transmits, to the engine start control means 111, a message to switch the reverse-rotational drive to the normal-rotational drive. Upon receipt of the drive signal from the rewinding control stop means 110, the engine start control means 111 outputs a control signal to the drive control unit 85 to normal-rotational drive the ACG starter motor 70 at an engine start normal-rotational duty ratio (e.g. 100%).

According to the normal-rotational switching control as described above, an occupant performs throttle operation to start moving during reverse-rotational drive at the time of starting the idle stop control. In this case, it is possible to shorten the time taken to restart the engine from the start of the throttle operation compared with the constitution in which waiting is done until the rewinding control has fully been completed, before the reverse-rotational drive is switched to the normal-rotational drive. Thus, it is possible to shorten the time taken to start the vehicle after the throttle operation has been done.

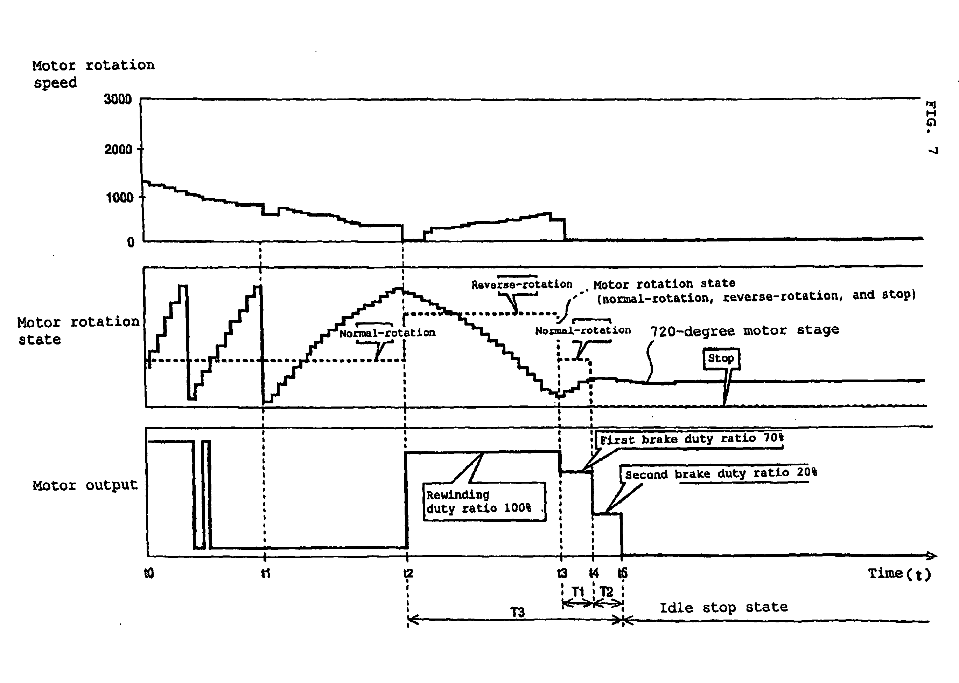

Fig. 7 is a time chart illustrating a flow of the idle stop start-time rewinding control. This figure illustrates motor rotation speed, motor rotation states and motor output in order from above. At time t1, the idle stop conditions as described earlier are satisfied and the idle stop control is started. Thereafter, at time T2, if the stop of the crankshaft 51 is detected, the rewinding control is started at a rewinding duty ratio (100%).

At time t3, the crankshaft 51 comes close to the compression top dead center in the reverse-rotational direction to increase the compression reactive force of the piston. Thus, the piston is pushed back in the state where the reverse-rotation energization is continued at the rewinding duty ratio (100%), so that the crankshaft 51 is turned into the normal-rotation. In other words, "the swing-back" of the crankshaft 51 is started. If detecting the fact that the crankshaft is turned into the normal-rotation on the basis of the output signal of the motor angle sensor 29, the idle stop start-time rewinding control unit 100 determines that the crankshaft detects the predetermined position, and switches the energization of the ACG starter motor 70 into the motor brake control of the first stage.

In the motor brake control of the first stage started at time t3, the first brake duty ratio (70%) is given by the first brake means 106 and at the same time the first timer 105 starts to measure a first predetermined period of time T1 (e.g. 0.1 second). Next, at time t4, the motor brake control of the second stage is started after the elapse of the first predetermined period of time T1. In the motor brake control of the second stage, the second brake duty ratio (20%) is given by the second brake means 108 and at the same time the second timer 107 starts to measure a second predetermined period of time T2 (e.g. 0.1 second). At time t5, after the elapse of the second predetermined period of time T2 measured by the second timer 107, the reverse-rotation energization to the ACG starter motor 70 is ended and moves into the idle stop state. Incidentally, the first brake duty ratio may be set at any value equal to or more than 50% and the second brake duty ratio may be set at any value equal to or less than 50%.

According to the motor brake control of the two-stage described above, "the swing-back" of the crankshaft can be allowed to converge in a short time by the motor brake of the two kinds: first strong braking and second weak braking. Therefore, the rewinding motor duty ratio can be set at a value of as large as 100%. Thus, it is possible to shorten a period of time T3 from rewinding control start time t2 to rewinding control completion time t5. This effect of the shortening is so large that the period of time to the completion of the rewinding control is about half (e.g. 0.5 second) of the traditional method. Incidentally, the rewinding motor duty ratio may be set at any value between 90% and 100%. In this way, excessive rewinding can be prevented during the rewinding control.

The stop position of the reverse-rotational drive and the start position of the first and second brake control based on the rewinding duty ratios can be detected based on a variation in transit speed of the 720-degree motor stage in which two rotations of the crankshaft 51 are equally divided by the 72 motor stages or on the fact that the 720-degree motor stage reaches a predetermined stage.

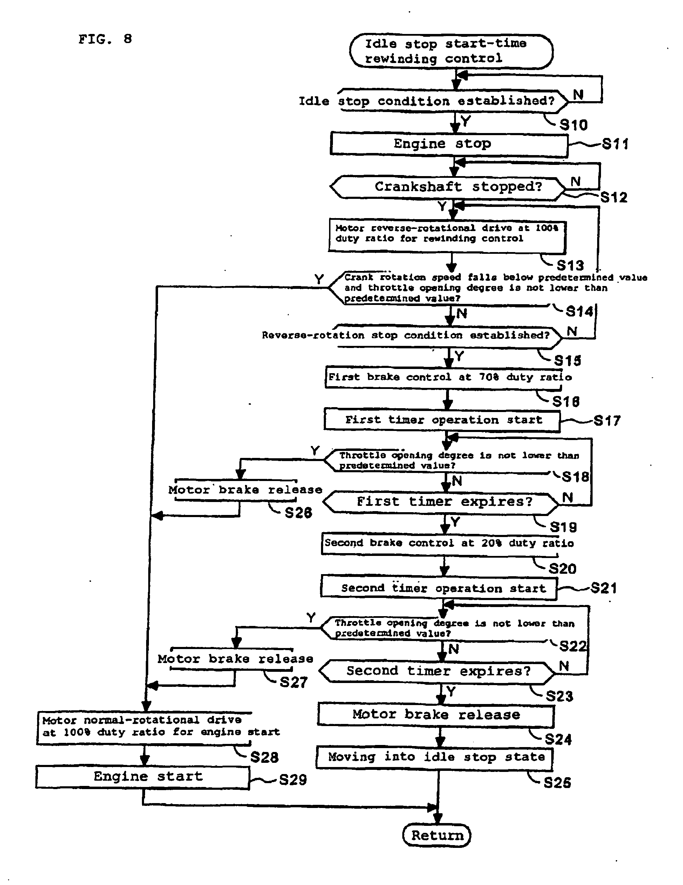

Fig. 8 is a flowchart illustrating a procedure for the idle stop start-time rewinding control. This flowchart includes processing in the case where the throttle operation is performed before moving into the idle stop state, in addition to the procedure for the two-stage motor brake control described above. First, in step S10, a determination is made as to whether or not the idle stop conditions are established. If the affirmative determination is made, the control proceeds to step S11, in which the stop processing of the engine E is performed. Incidentally, if a negative determination is made in step S10, the control is returned to the determination of step S10.

In subsequent step S12, a determination is made as to whether or not the rotation of the crankshaft 51 is stopped based on the output signal of the motor angle sensor 29. If a negative determination is made in step S12, the control returns to the determination of step S12. On the other hand, if an affirmative determination is made, the control proceeds to step S13, in which the reverse-rotational drive is started at on the rewinding control duty ratio (100%).

Next, in step S14, a determination is made as to whether or not to detect the fact that the crank rotation speed falls below the predetermined value and that the throttle opening degree is not lower than the predetermined value. If a negative determination is made in step S14, the control proceeds to step S15. On the hand, if an affirmative determination is made, the control proceeds to step 28, in which the ACG starter motor 70 is normal-rotationally driven at an engine start duty ratio (100%) to restart the engine. In step S29, the engine is started by the normal-rotational drive. Then, the series of control is ended without moving into the idle stop state.

In step S15, a determination is made as to whether or not the reverse-rotation stop condition is established. In step S15, if an affirmative determination is made, i.e., if it is determined that the reverse-rotation stop condition is established by the compression reactive force pushing back the piston to shift the crankshaft from the reverse-rotation to the normal-rotation, the control proceeds to step S16. In step S16, the first brake control is started at the first brake duty ratio (70%) by the first brake means 106. In subsequent step S17, the first timer 105 operatively starts to measure the implementation time of the first brake control.

Next, in step S18, a determination is made as to whether or not the throttle opening degree is not lower than the predetermined value. In step S18, if an affirmative determination is made, i.e., if it is determined that the throttle operation is performed during the implementation of the first brake control to allow "the swing-back" to converge, the control proceeds to step S26, in which the motor brake at the first brake duty ratio is released. After the release of the motor brake, similarly to the affirmative determination of step S14, the engine is restarted in steps S28 and S29, and then the series of control is ended.

On the other hand, if a negative determination is made in step S18, the control proceeds to step S19, in which a determination is made as whether or not the first timer 105 expires. If an affirmative determination is made in step S19, the control proceeds to step S20, in which the second brake control is started at the second brake duty ratio (20%) by the second brake means 107. In subsequent step S21, the operation of the second timer 107 is started to measure the implementation time of the second brake control.

Next, in step S22, a determination is made as to whether the throttle opening degree is not lower than the predetermined value. In step S22, if an affirmative determination is made, i.e., if it is determined that the throttle operation is performed during the implementation of the second brake control, the control proceeds to step S26, in which the motor brake is released. After the release of the motor brake, similarly to the affirmative determination in step S14 or S18, the engine is restarted in steps S28 and S29. Then the series of control is ended.

On the other hand, if a negative determination is made in step S22, the control proceeds to step S23, in which a determination is made as to whether or not the second timer 107 expires. If an affirmative determination is made in step S23, the control proceeds to step S24, in which the motor brake at the second brake duty ratio is released. In step S25, the engine is shifted to the idle stop state.

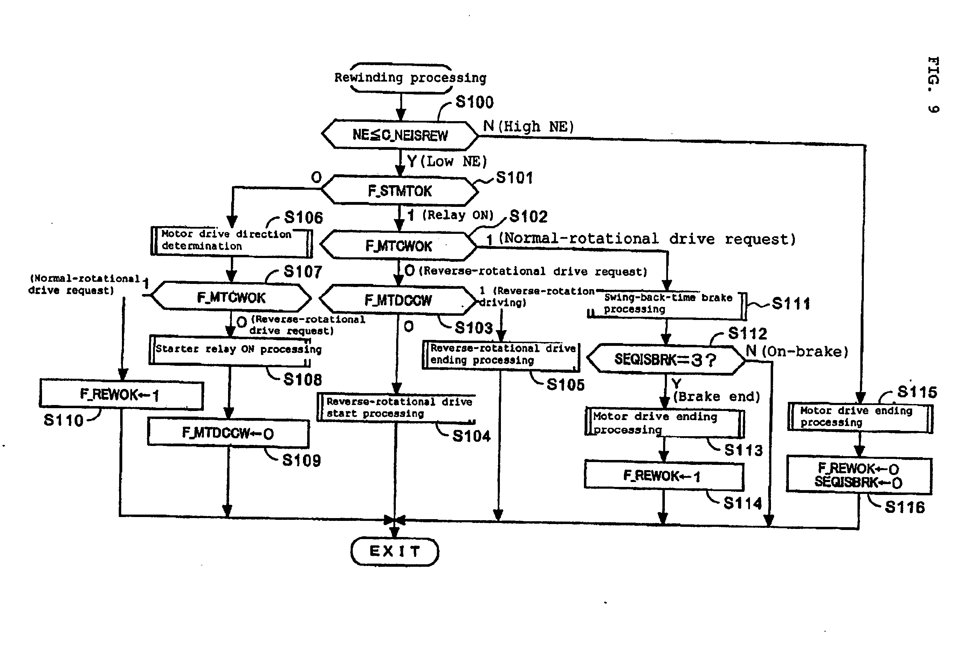

The overall flow of the rewinding control is described with reference to the flowchart of Fig. 8. The rewinding control, the detection processing of the reverse-rotation stop condition, the determination processing of the reverse-rotation duty, etc., are described in detail with reference to flowcharts of Figs. 9 to 15.

Fig. 9 is a flowchart illustrating a specific procedure for the rewinding processing (the rewinding control). In step S100, a determination is made as whether or not engine speed (NE) falls below rewinding permission engine speed (C_NEISREW). If an affirmative determination is made in step S100, the control proceeds to step S101.

On the other hand, if a negative determination is made in step S100, the control proceeds to step S115, in which ending processing of the motor drive is performed, and proceeds to step S116. In step S166, a rewinding processing flag (F_REWOK) and a motor brake mode (SEQISBRK) are each set to 0 and the series of control is ended. Incidentally, the brake mode consists of four modes in all: modes 0, 1, 2, and 3. Mode 0 corresponds to non-application of brake, mode 1 corresponds to "under implementation of the first brake control," mode 2 corresponds to "under implementation of the second brake control" and mode 3 corresponds to "end of the brake control."

In step S101, a determination is made as to whether a starter motor flag (F_STMTOK) is either 1 or 0. If it is determined that the starter motor flag is 1, i.e., a starter motor relay is ON, the control proceeds to step S102. In step S102, a determination is made as to whether a motor drive request flag (F_MTCWOK) is either 1 or 0. If the motor drive request flag is 0, it is determined that the reverse-rotational drive request is present and the control proceeds to step S103.

In step S103, a determination is made as to whether a reverse-rotational drive flag (F_MTDCCW) is either 0 or 1. In step S103, if it is determined that the reverse-rotational drive flag is 0, i.e., the reverse-rotational drive is not being done (the normal-rotation or stop state), the control proceeds to step S104, in which reverse-rotational drive start processing is implemented. Then, the series of control is ended. On the other hand, in step S103, if it is determined that the reverse-rotational drive flag is 1, i.e., the reverse-rotational drive is being done, reverse-rotational drive ending determination is executed in step S105 and then, the series of control is ended.

Returning to the determination of step S101, if it is determined that the starter motor flag (F_STMTOK) is 0 in step S101, the control proceeds to step S106, in which a motor drive direction determination is executed. In subsequent step S107, similarly to step S102, a determination is made as to whether the motor drive request flag (F_MTCWOK) is either 1 or 0. If the motor drive request flag is 0, it is determined that reverse-rotation request is present and the control proceeds to step S108.

Starter relay ON-processing is executed in step S108 and the reverse-rotational drive flag (F_MTDCCW) is set to 0 in step S109. Then, the series of control is ended. On the other hand, if it is determined in step S107 that the motor drive request flag is 1, i.e., that the normal-rotational drive request is present, a rewinding processing flag (F_REWOK) is set to 1. Then, the series of control is ended.

Returning to the determination of step S102, if it is determined in step S102 that the motor drive request flag (F_MTCWOK) is 1, i.e., that the normal-rotational drive request is present, the control proceeds to step S111, in which the swing-back-time brake processing is executed. In subsequent step S112, a determination is made as to whether or not the brake mode (SEQISBRK) is 3. In step S112 if an affirmative determination is made, i.e., if it is determined that the brake control is ended, the control proceeds to step S113. In step S113, the motor drive ending processing is performed. In step S114, the rewinding processing flag (F_REWOK) is set to 1. Then, the series of control is ended. On the other hand, in step S112, it is determined that brake mode is not 3, the control is ended as it is.

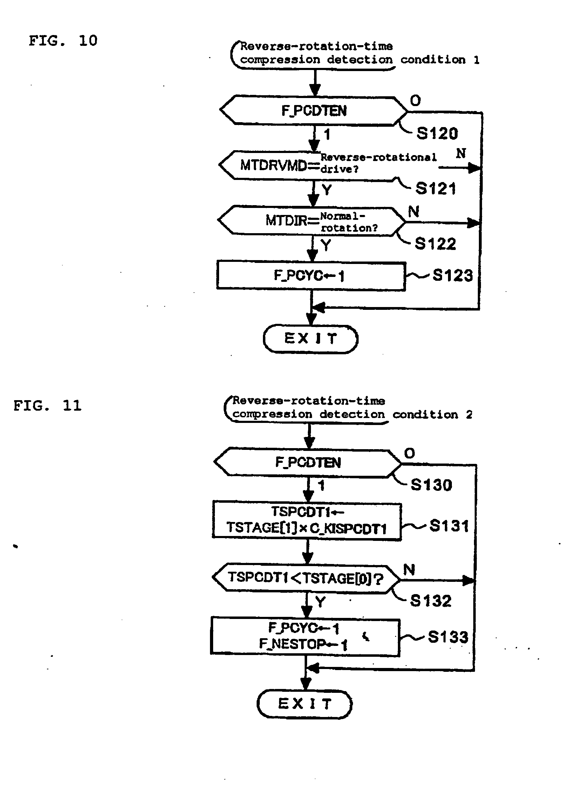

Fig. 10 is a flowchart illustrating a procedure in which a reverse-rotation-time compression detection condition 1 is satisfied. The reverse-rotation-time compression detection condition 1 is the same as the above-described reverse-rotation stop condition (see Fig. 8). This flowchart illustrates a procedure for how to detect the fact that the crankshaft is turned from the reverse-rotation into the normal-rotation. First, in step S120, a determination is made as to whether a reverse-rotation-time compression detection permission flag (F_PCDTEN) is either 1 or 0. If it is determined that the reverse-rotation-time compression detection permission flag is 1, the control proceeds to step S121.

In step S121, a determination is made as to whether or not the motor drive mode (MTDRVMD) is a reverse-rotational drive mode. In step S121, if an affirmative determination is made, the control proceeds to step S122, in which a determination is made as to whether or not the motor-rotational direction (MTDIR) is normal-rotation. Incidentally, three modes in total (mode 0: stop, mode 1: normal-rotation, and mode 2: reverse-rotation) are set in the motor-rotational direction (MTDIR).

If an affirmative determination is made in step S122, the control proceeds to step S123, in which a reverse-rotation-time compression detection flag (F_PCYC) is set to 1, i.e., it is determined that the crankshaft is reverse-rotationally driven to a predetermined position. Then, the series of control is ended. Incidentally, if it is determined that the reverse-rotation-time compression detection permission flag is 0 in step S120 or a negative determination is made in step S121 or S122, the series of control is ended.

Fig. 11 is a flowchart illustrating a procedure in which a reverse-rotation-time compression detection condition 2 is satisfied. According to a reverse-rotation compression detection condition 2, it is determined that the crankshaft is rewound to the predetermined position based on the fact that the compression reactive force allows the reverse-rotation speed of the crankshaft to fall below a predetermined value. First, in step S130, a determination is made as to whether a reverse-rotation-time compression detection permission flag (F_PCDTEN) is either 1 or 0. If it is determined that the reverse-rotation-time compression detection flag is 1, the control proceeds to step S131.

In step S131, a numerical value obtained by multiplying a previous measured value (TSTAGE[1]) of rotor-sensor-time by a multiple number for determination time calculation is assigned to reverse-rotation-time compression detection determination time (TSPCDT1) as a variable. For example, the multiple number for determination time calculation can be set to e.g. 3. In step S132, a determination is made as to whether or not the current measured value (TSTAGE[0]) of rotor-sensor-time exceeds the reverse-rotation-time compression detection determination time (TSPCDT1).

In step S132, if an affirmative determination is made, i.e., if it is determined that the current measured value of rotor-sensor-time exceeds the previous measured value by three times, the control proceeds to step S133. In step S133, as it is determined that the crankshaft is rewound to the predetermined position, a reverse-rotation-time compression detection flag (F_PCYC) and an NE30 clear flag (F_NESTOP) based on the reverse-rotation-time compression detection are each set to 1. Then, the series of control is ended. If it is determined that the reverse-rotation-time compression detection permission flag is 0 in step S130, or if a negative determination is made in the determination of step S132, the series of control is ended. Incidentally, NE30 is a measured value corresponding to the rotation speed of the crankshaft.

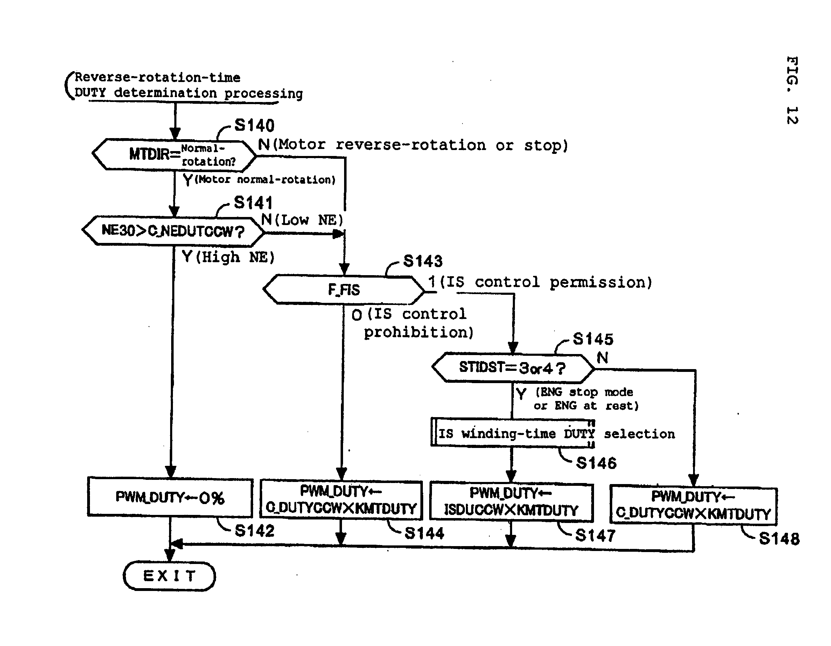

Fig. 12 is a flowchart illustrating a procedure for reverse-rotation-time duty (DUTY) determination processing. First, in step S140, a determination is made as to whether or not a motor-rotational direction (MTDIR) is normal-rotation. If an affirmative determination is made in step S140, the control proceeds to step S141, in which a determination is made as to whether or not the rotation speed NE30 of the crankshaft exceeds a predetermined value (C_NEDUTCCW). If an affirmative determination is made in step S141, the control proceeds to step S142, in which a motor duty ratio (PWM_DUTY) is set to 0%. Then, the series of control is ended.

On the other hand, if a negative determination is made in step S140 or S141, the control proceeds to step S143. In step S143, a determination is made as to whether an idle stop permission flag (F_FIS) is either 1 or 0. If it is determined that the idle stop permission flag is 0, i.e., that idle stop control (IS) is prohibited, the control proceeds to step S144. In step S144, the motor duty ratio (PWM_DUTY) is set to a swing-back reverse-rotation duty ratio (C_DUTYCCW (swing-back coefficient) × KMTDUTY (a predetermined duty ratio), e.g. 100%). Then, the series of control is ended.

In step S143, it is determined that the idle stop permission flag is 1, i.e., that the idle stop control is permitted, the control proceeds to step S145. In step S145, a determination is made as to whether or not an idle stop stage (STIDST) is 3: engine (ENG) stop mode, or 4: engine (ENG) being at rest.

If an affirmative determination is made in step S145, the control proceeds to step S146 and idle stop (IS) winding-time duty (DUTY) selection is executed. In subsequent step S147, the motor duty ratio (PWM_DUTY) is set to a rewinding reverse-rotation duty ratio (ISDUCCW (rewinding coefficient) × KMTDUTY (a predetermined duty ratio), e.g. 100%). Then, the series of control is ended.

On the other hand, if a negative determination is made in step S145, the control proceeds to step S148, in which the motor duty ratio (PWM_DUTY) is set to a swing-back reverse-rotation duty ratio (C_DUTYCCW (swing-back coefficient) × KMTDUTY (a predetermined duty ratio), e.g. 100%). Then, the series of control is ended.

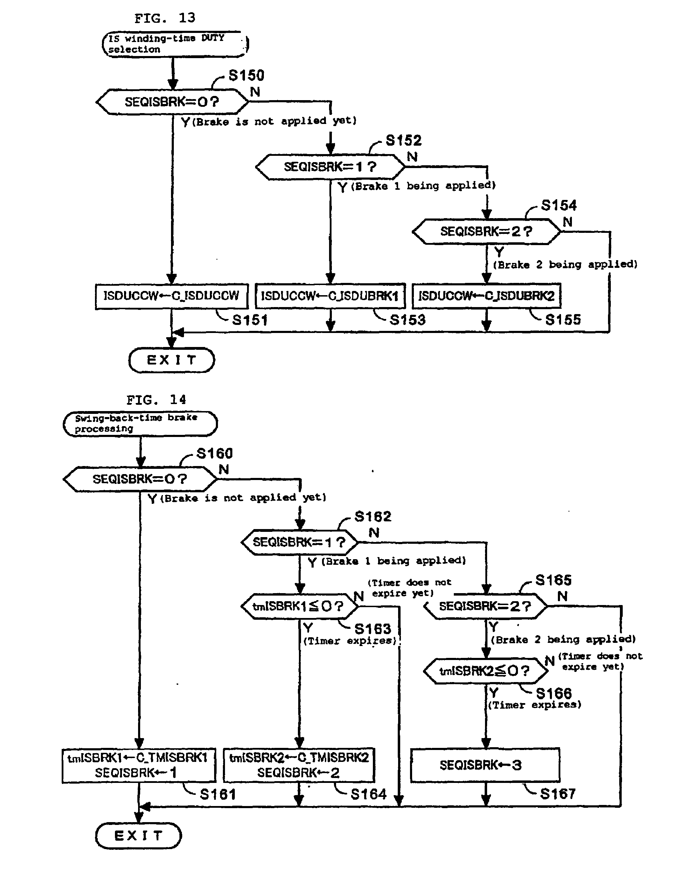

Fig. 13 is a flowchart illustrating details of idle stop (IS) winding-time duty (DUTY) selection processing. This processing corresponds to step S146 of the flowchart of Fig. 13. In step S150, a determination is made as to whether or not a brake mode (SEQISBRK) is 0. If an affirmative determination is made in step S150, i.e., if it is determined that the motor brake control is not applied yet, the control proceeds to step S151. In step S151, an idle stop counter (ISDUCCW) is set to an initial value (C_ISDUCCW). Then, the series of control is ended.

If a negative determination is made in step S150, i.e., if it is determined that brake is applied, the control proceeds to step S152. In step S152, a determination is made as to whether or not the brake mode is 1. If an affirmative determination is made in step S152, i.e., if it is determined that brake 1 (first brake control) is being applied, the control proceeds to step S153. In step S153, the measurement of first predetermined time T1 (C_ISDUBRK1) is started by an idle stop counter.

If a negative determination is made in step S152, the control proceeds to step S154, in which a determination is made as to whether or not the brake mode is 2. In step S154, if an affirmative determination is made, i.e., if it is determined that brake 2 (second brake control) is being applied, the control proceeds to step S155. In step S155, the measurement of second predetermined time T2 (C_ISDUBRK1) is started by the idle stop counter. Incidentally, if a negative determination is made in step S154, the control is ended as it is.

Fig. 14 is a flowchart illustrating a procedure for swing-back-time brake processing. This swing-back-time brake processing corresponds to step S111 of the flowchart illustrated in Fig. 9. First, in step S160, a determination is made as to whether or not the brake mode (SEQISBRK) is 0. In step S160, if an affirmative determination is made, i.e., if it is determined that the motor brake control is not applied yet, the control proceeds to step S161. In step S161, an expiring value (tmISBRK1) of the timer as a variable is set to first predetermined time T1 (C_TMISBRK1), its measurement is started, and the brake mode (SEQISBRK) is set to 1. Then, the series of control is ended.

If a negative determination is made in step S160, the control proceeds to step S162, in which a determination is made as to whether or not the brake mode is 1. In step S162, if an affirmative determination is made, i.e., if it is determined that the first brake control is being applied, the control proceeds to step S163. In step S163, a determination is made as to whether or not tmISBRK1 becomes equal to or smaller than 0. If an affirmative determination is made, i.e., if it is determined that the timer has expired and first predetermined time has lapsed, the control proceeds to step S164. In step S164, an expiring value (tmISBRK2) of the timer is set to second predetermined time T2 (C_TMISBRK2), its measurement is started, and the brake mode (SEQISBRK) is set to 2. Then, the series of control is ended.

In step S162, if a negative determination is made, the control proceeds to step S165, in which a determination is made as to whether or not the brake mode is 2. In step S165, if an affirmative determination is made, i.e., if the second brake control is being applied, the control proceeds to step S166. In step S166, a determination is made as to whether or not tmISBRK2 becomes equal to or smaller than 0. If an affirmative determination is made, i.e., if it is determined that the timer has expired and the second predetermined time has lapsed, the control proceeds to step S167. In step S167, the brake mode (SEQISBRK) is set to 3 (brake control end). Then, the series of control is ended.

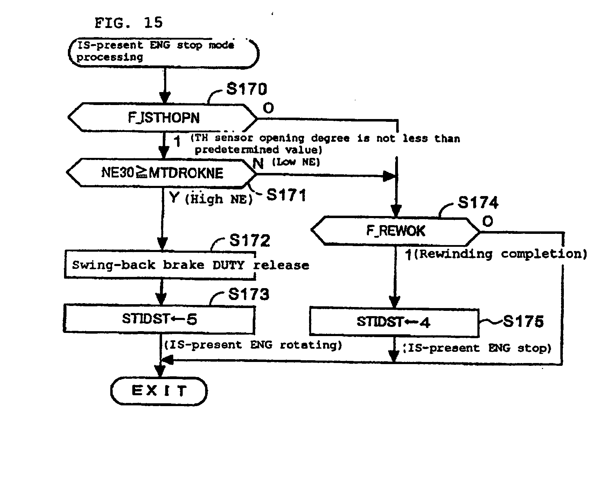

Fig. 15 is a flowchart illustrating a procedure for idle stop (IS)-present engine (EN) stop mode processing. In this processing, when the throttle opening degree becomes not less than a predetermined value on the way of idle stop start-time rewinding control, if a predetermined condition is met, the motor brake is released. First, in step S170, a determination is made as to whether a throttle open flag (F_ISTHOPN) is either 1 or 0. If it is determined that the throttle open flag (F_ISTHOPN) is 1, i.e., that the output value of the throttle (TH) sensor becomes not less than the predetermined value, the control proceeds to step S171.

In step S171, a determination is made as to whether or not the crank rotation speed NE30 becomes not less than a predetermined value (MTDROKNE). In step S171, if an affirmative determination is made, i.e., if the negative rotation speed resulting from reverse-rotational drive reduces (comes close to a stop state) and the rotation speed becomes not less than the predetermined value (high-NE), the control proceeds to step S172. In step S172, the swing-back brake duty (DUTY) is released.

In subsequent step S173, the idle stop stage (STIDST) is set to 5, i.e., an idle stop (IS)-present engine (ENG) rotating stage is set. Then, the series of control is ended. Incidentally, the IS-present ENG rotating stage is a stage corresponding to a case where the engine is running in the state capable of being shifted to idle stop if a predetermined condition is met. Here, the IS- present ENG rotating stage corresponds to a state where the motor brake is released before the shifting to the idle stop state and the preparation of the engine restart is completed.

On the other hand, in step S171 if a negative determination is made, it is determined that since the reverse-rotation directional rotation speed is still large (low NE), timing of releasing the swing-back brake is not reached yet. The control proceeds to step S174. In step S174, a determination is made as to whether or not the rewinding processing flag (R_REWOK) is 1 or 0. If it is determined that the rewinding processing flag (R_REWOK) is 1, i.e., that the rewinding processing has been completed, the control proceeds to step S175. In step S175, the idle stop stage (STIDST) is set to 4, i.e., it is brought into the IS-present ENG stop stage. Then, the series of control is ended. Incidentally, the IS-present engine stop stage is a synonym for the idle stop state.

As described above, according to the engine start control system of the present invention, in the idle stop start-time rewinding control, if it is detected that the crankshaft is rewound to a predetermined value by the reverse-rotational drive, the crankshaft is braked by two-stage, first strong and second weak, braking. Therefore, "swing-back" resulting from compression reactive force can be allowed to converge in a short time, which makes it possible to shorten time taken to complete the rewinding control.

Even during the execution of the motor brake control, switching to the normal-rotation for engine start is achieved in response to throttle operation. Further, even on the way of the reverse-rotational drive of the rewinding control, if the drive speed in the reverse-rotational direction is smaller than a predetermined value, switching to the normal-rotational drive is achieved in response to the throttle operation. Thus, it is possible to shorten the time taken to restart the engine from the start of the throttle operation.

Incidentally, the shape and configuration of the ACG starter motor and of the motor angle sensor, the internal configuration of the ECU (the engine start control system), the reverse-rotational duty ratio applied to the idle stop start-time rewinding control, the set values of the first and second duty ratios, the implementation times of the first and second brake control, etc., are not limited to the embodiments described above. Various other modifications or alterations are possible as well. The reverse-rotational duty ratio is set for every motor 720-degree stage. The duty is set according to instant NE during reverse-rotation. The engine start control system according to the present invention can be applied to three-wheeled and four-wheeled vehicles and the like as well as to motorcycles.

1 ... Motorcycle, 29 ... Motor angle sensor, 51 ... Crankshaft, 70 ... ACG starter motor (motor), 80 ... ECU (engine start control system), 81 ... Full-wave rectifying bridge circuit, 90 ... Swing-back control unit, 100 ... Idle stop start-time rewinding control unit, 101 ... Reverse-rotational drive control means, 102 ... Crank-stop detection means, 104 ... Motor brake means, 105 ... First timer, 106 ... First brake means, 107 ... Second timer, 108 ... Second brake means, 109 ... Engine start-enabling rotational speed setting means, 110 ... Rewinding control stop means, 111 ... Engine start control means

## Claims

1. An engine start control system (80) in which idle stop control is exercised to automatically stop an engine (E) based on establishment of a predetermined condition and after the stop of the engine (E) a crankshaft (51) is reverse-rotationally driven to a predetermined position by a motor (70) for normal-rotational or reverse-rotational drive, comprising
an idle stop start-time rewinding control unit (100) exercising rewinding control in which immediately after the engine stop by the idle stop control, rewinding control is exercised to reverse-rotationally drive the crankshaft (51) to the predetermined position,
wherein the idle stop start-time rewinding control unit (100) includes
reverse-rotational drive control means (101) for reverse-rotationally driving the motor (70) at a rewinding control duty ratio immediately after the engine stop;
reverse-rotation stop condition determination means (103) for detecting that the crankshaft (51) is rewound to the predetermined position by the reverse-rotational drive; and
motor brake means (104) for applying a braking force to the crankshaft (51) by reverse-rotationally driving the motor (70) when it is detected that the crankshaft (51) is rewound to the predetermined position;
the motor brake means (104) is configured to apply the braking force stepwise,
the engine start control system (80) further comprises a motor angle sensor (29) for detecting an rotation angle of the motor (70);
**characterized in that**
the reverse-rotation stop condition determination means (103) determines that the crankshaft (51) is rewound to the predetermined position if a currently measured passage time reaches a value not less than a predetermined multiplied value of an immediately previously measured passage time on the basis of a time at which a predetermined rotation angle detected by the motor angle sensor (29) passes,
a duty ratio applied to the braking force is set to a value smaller than the rewinding control duty ratio, and
the motor brake means (104) applies the braking force stepwise by use of a plurality of different duty ratios.

2. An engine start control system (80) in which idle stop control is exercised to automatically stop an engine (E) based on establishment of a predetermined condition and after the stop of the engine (E) a crankshaft (51) is reverse-rotationally driven to a predetermined position by a motor (70) for normal-rotational or reverse-rotational drive, comprising
an idle stop start-time rewinding control unit (100) exercising rewinding control in which immediately after the engine stop by the idle stop control, rewinding control is exercised to reverse-rotationally drive the crankshaft (51) to the predetermined position,
wherein the idle stop start-time rewinding control unit (100) includes
reverse-rotational drive control means (101) for reverse-rotationally driving the motor (70) at a rewinding control duty ratio immediately after the engine stop;
reverse-rotation stop condition determination means (103) for detecting that the crankshaft (51) is rewound to the predetermined position by the reverse-rotational drive; and
motor brake means (104) for applying a braking force to the crankshaft (51) by reverse-rotationally driving the motor (70) when it is detected that the crankshaft (51) is rewound to the predetermined position;
the motor brake means (104) is configured to apply the braking force stepwise,
the engine start control system (80) further comprises a motor angle sensor (29) for detecting an rotation angle of the motor (70);
**characterized in that**
the reverse-rotation stop condition determination means (103) determines that the crankshaft (51) is rewound to the predetermined position if it is determined that the crankshaft (51) turns into normal-rotation from reverse-rotation on the basis of a passage state of a predetermined rotation angle detected by the motor angle sensor (29),
a duty ratio applied to the braking force is set to a value smaller than the rewinding control duty ratio, and
the motor brake means (104) applies the braking force stepwise by use of a plurality of different duty ratios.

3. The engine start control system according to claim 1 or 2,
wherein the motor brake means (104) applies the braking force stepwise while reducing the plurality of different duty ratios stepwise.

4. The engine start control system according to any one of claims 1 to 3,
wherein the motor brake means applies the braking force stepwise by use of a first duty ratio and a second duty ratio smaller than the first duty ratio.

5. The engine start control system according to claim 4,
wherein the motor brake means (104) continues the braking force at the first duty ratio for a first predetermined period of time (T1) and thereafter continues the braking force at the second duty ratio for a second predetermined period of time (T2).

6. The engine start control system according to any one of claims 1 to 5, further comprising
a throttle opening degree sensor (23) for detecting a throttle opening degree;
wherein the rewinding control involves the reverse-rotational drive and the braking force; and
the idle stop start-time rewinding control unit (100) restarts the engine if an output value of the throttle opening degree sensor exceeds a predetermined value during the idle stop control, and even during the application of the braking force, starts the normal-rotational drive of the motor (70) to restart the engine (E) if an output value of the throttle opening degree sensor (23) exceeds the predetermined value.

7. The engine start control system according to claim 6,
wherein even during the application of the reverse-rotational drive, the idle stop start-time rewinding control unit (100) stops the reverse-rotational drive and starts normal-rotational drive of the motor (70) to restart the engine (E) if rotation speed of the crankshaft (51) exceeds a first predetermined value and an output value of the throttle opening degree sensor (23) exceeds a second predetermined value.

## Patentansprüche

1. Motorstart-Steuerungssystem (80) bei dem eine Leerlaufabstellsteuerung ausgeübt wird, um einen Motor (E) automatisch basierend auf Feststellen einer vorgegebenen Bedingung abzustellen und bei dem nach dem Abstellen des Motors (E) eine Kurbelwelle (51) in umgekehrter Richtung drehend bis zu einer vorbestimmten Position durch einen Motor (70) für normaldrehenden oder in umgekehrter Richtung drehenden Antrieb angetrieben wird,
aufweisend
eine Leerlaufabstellstartzeit - Rücklaufsteuerungseinheit (100) ausübend Rücklaufsteuerung, in welcher unmittelbar nach einem Motorabstellen durch die Leerlaufabstellsteuerung Rücklaufsteuerung ausgeübt wird, um die Kurbelwelle (51) rückwärtsdrehend bis zu der vorbestimmten Position anzutreiben;
wobei die Leerlaufabstellstartzeit - Rücklaufsteuerungseinheit (100) umfasst
rückwärtsdrehende Antriebssteuerungsmittel (101) zum rückwärtsdrehenden Antreiben des Motors (70) bei einer Rücklaufsteuerungseinschaltdauer unmittelbar nach dem Motorabstellen;
Rückwärtsdrehung - Abstellbedingungs - Ermittlungsmittel (103) zum Ermitteln, dass die Kurbelwelle (51) bis zu der vorbestimmten Position durch den rückwärtsdrehenden Antrieb zurückgelaufen ist; und
Motorbremsmittel (104) zum Anwenden einer Bremskraft auf die Kurbelwelle (51) durch rückwärtsdrehendes Antreiben des Motors (70), wenn ermittelt ist, dass die Kurbelwelle (51) bis zu der vorbestimmten Position zurückgelaufen ist;
wobei die Motorbremsmittel (104) eingerichtet sind, um die Bremskraft schrittweise anzuwenden,
wobei das Motorstartsteuerungssystem (80) außerdem einen Motorwinkelsensor (29) aufweist, um einen Drehwinkel des Motors (70) zu erfassen;
**dadurch gekennzeichnet, dass**
die Rückwärtsdrehungs-Abstellbedingungs-Ermittlungsmittel (103) ermitteln, dass die Kurbelwelle (51) bis zu der vorgegebenen Position zurückgelaufen ist, wenn eine momentan gemessene Durchlaufzeit einen Wert erreicht, der nicht weniger als ein vorgegebener, multiplizierter Wert einer unmittelbar vorher gemessenen Durchlaufzeit erreicht, auf Basis einer Zeit, zu der ein vorbestimmter Drehwinkel, der von dem Motorwinkelsensor (29) ermittelt wird, überschritten wird,
eine Einschaltdauer, die auf die Bremskraft angewendet wird, auf einen Wert eingestellt wird, der kleiner ist als die Rücklaufsteuerungseinschaltdauer und
das Motorbremsmittel (104) die Bremskraft schrittweise durch Verwenden einer Mehrzahl von verschiedenen Einschaltdauern anwendet.

2. Motorstartsteuerungssystem (80), bei dem Leerlaufabstellsteuerung ausgeübt wird, um einen Motor (E) automatisch basierend auf dem Feststellen einer vorgegebenen Bedingung abzustellen und nach dem Abstellen des Motors (E) eine Kurbelwelle (51) rückwärtsdrehend bis zu einer vorgegebenen Position durch einen Motor (70) für Normaldrehung oder Rückwärtsdrehungsantrieb angetrieben wird,
aufweisend
eine Leerlaufabstellstartzeit - Rücklaufsteuerungseinheit (100) ausübend eine Rücklaufsteuerung bei der unmittelbar nach dem Motorabstellen durch die Leerlaufabstellsteuerung Rücklaufsteuerung ausgeübt wird, um die Kurbelwelle (51) rückwärtsdrehend bis zu der vorbestimmten Position anzutreiben,
wobei die Leerlaufabstellstartzeit - Rücklaufsteuerungseinheit (100) beinhaltet,
rückwärtsdrehende Antriebssteuerungsmittel (101) zum rückwärtsdrehenden Antreiben des Motors (70) bei einer Rücklaufsteuerungseinschaltdauer unmittelbar nach dem Motorabstellen;
Rückwärtsdrehungs-Abstellbedingungs-Ermittlungsmittel (103) zum Ermitteln, dass die Kurbelwelle (51) bis zu der vorbestimmten Position durch den rückwärtsdrehenden Antrieb zurückgelaufen ist; und
Motorbremsmittel (104) zum Anwenden einer Bremskraft auf die Kurbelwelle (51) durch rückwärtsdrehendes Antreiben des Motors (70), wenn ermittelt wird, dass die Kurbelwelle (51) bis zu der vorbestimmen Position zurückgelaufen ist;
wobei die Motorbremsmittel (104) eingerichtet sind, um die Bremskraft schrittweise anzuwenden,
das Motorstartsteuerungssystem (80) außerdem aufweist einen Motorwinkelsensor (29) zum Erfassen eines Drehwinkels des Motors (70);
**dadurch gekennzeichnet, dass**
die Rückwärtsdrehungsabstellbedingungs-Ermittlungsmittel (103) ermitteln, dass die Kurbelwelle (51) bis zu der vorbestimmten Position zurückgelaufen ist, wenn ermittelt wird, dass die Kurbelwelle (51) von Rückwärtsdrehung auf Normaldrehung umschaltet, auf Basis eines Durchlaufzustands eines vorbestimmten Drehwinkels, der durch den Motorwinkelsensor (29)erfasst wird,
eine Einschaltdauer, die auf die Bremskraft angewendet wird, auf einen Wert gesetzt wird, der kleiner ist als die Rücklaufsteuerungseinschaltdauer und
das Motorbremsmittel (104) die Bremskraft schrittweise durch Verwenden einer Mehrzahl von verschiedenen Einschaltdauern anwendet.

3. Motorstartsteuerungssystem gemäß Anspruch 1 oder 2,
wobei die Motorbremsmittel (104) die Bremskraft schrittweise anwenden, während die Mehrzahl von verschiedenen Einschaltdauern schrittweise reduziert wird.

4. Motorstartsteuerungssystem gemäß einem der Ansprüche 1 bis 3,
wobei die Motorbremsmittel (104) die Bremskraft schrittweise anwenden, durch Verwenden einer ersten Einschaltdauer und einer zweiten Einschaltdauer, die kleiner ist als die erste Einschaltdauer.

5. Motorstartsteuerungssystem gemäß Anspruch 4,
wobei die Motorbremsmittel (104) die Bremskraft bei der ersten Einschaltdauer für eine erste vorbestimmte Zeitspanner (T1) fortsetzen und danach die Bremskraft bei der zweiten Einschaltdauer für eine zweite vorbestimmte Zeitdauer (T2) fortsetzen.

6. Motorstartsteuerungssystem gemäß einem der Ansprüche 1 bis 5, weiterhin aufweisend
einen Drosselklappenöffnungsgradsensor (23) zum Erfassen eines Drosselklappenöffnungsgrads;
wobei die Rücklaufsteuerung den rückwärtsdrehenden Antrieb und die Bremskraft einbeziehen; und
die Leerlaufabstellstartzeit-Rücklaufsteuerungseinheit (100) den Motor neu startet, wenn ein Ausgangswert des Drosselklappenöffnungsgradsensors einen vorbestimmten Wert während der Leerlaufabstellsteuerung übersteigt, und sogar während des Anwendens einer Bremskraft den normaldrehenden Antrieb des Motors (70) beginnt, um den Motor (E) wieder zu starten, wenn ein Ausgangswert des Drosselklappenöffnungsgradsensors (23) den vorbestimmten Wert übersteigt.

7. Motorstartsteuerungssystem gemäß Anspruch 6,
wobei sogar während des Anwendens des rückwärtsdrehenden Antriebs die Leerlaufabstellstartzeit - Rücklaufsteuerungseinheit (100) den rückwärtsdrehenden Antrieb beendet und den normaldrehenden Antrieb des Motors (70) beginnt, um den Motor (E) wieder zu starten, wenn die Drehgeschwindigkeit der Kurbelwelle (51) einen ersten vorbestimmten Wert übersteigt und ein Ausgangswert des Drosselklappenöffnungsgradsensors (23) einen zweiten vorbestimmten Wert übersteigt.

## Revendications

1. Système de commande du démarrage d'un moteur thermique (80) dans lequel une commande d'arrêt au ralenti est exercée pour arrêter automatiquement un moteur thermique (E) sur la base de l'établissement d'une condition prédéterminée et après l'arrêt du moteur thermique (E) un vilebrequin (51) est entraîné en rotation antagoniste vers une position prédéterminée par un moteur électrique (70) pour un entraînement en rotation normale ou en rotation antagoniste, comprenant
une unité de commande du retour au temps de démarrage d'arrêt au ralenti (100) exerçant une commande de retour dans laquelle immédiatement après l'arrêt du moteur thermique par la commande d'arrêt au ralenti, la commande de retour est exercée pour entraîner en rotation antagoniste le vilebrequin (51) vers la position prédéterminée,
dans lequel l'unité de commande du retour au temps de démarrage d'arrêt au ralenti (100) comprend
des moyens de commande de l'entraînement en rotation antagoniste (101) pour entraîner en rotation antagoniste le moteur électrique (70) à un rapport de service de commande du retour immédiatement après l'arrêt du moteur thermique ;
des moyens de détermination de la condition d'arrêt en rotation antagoniste (103) pour détecter que le vilebrequin (51) est retourné à la position prédéterminée par l'entraînement en rotation antagoniste ; et
des moyens de freinage du moteur électrique (104) pour appliquer une force de freinage au vilebrequin (51) par entraînement en rotation antagoniste du moteur électrique (70) lorsqu'il est détecté que le vilebrequin (51) est retourné à la position prédéterminée ;
les moyens de freinage du moteur électrique (104) sont configurés pour appliquer la force de freinage de manière progressive,
le système de commande de démarrage du moteur thermique (80) comprend en outre un détecteur d'angle du moteur (29) pour détecter un angle de rotation du moteur électrique (70) ;
**caractérisé en ce que**
les moyens de détermination de la condition d'arrêt en rotation antagoniste (103) déterminent que le vilebrequin (51) est retourné à la position prédéterminée si un temps de passage mesuré actuellement atteint une valeur non inférieure à une valeur multipliée prédéterminée d'un temps de passage mesuré immédiatement avant sur la base d'un temps auquel a lieu un angle de rotation prédéterminé détecté par le détecteur d'angle du moteur électrique (29),
un rapport de service appliqué à la force de freinage est fixé à une valeur inférieure au rapport de service de commande du retour, et
les moyens de freinage du moteur électrique (104) appliquent la force de freinage de manière progressive en utilisant une pluralité de rapports de service différents.

2. Système de commande du démarrage d'un moteur thermique (80) dans lequel une commande d'arrêt au ralenti est exercée pour arrêter automatiquement un moteur thermique (E) sur la base de l'établissement d'une condition prédéterminée et après l'arrêt du moteur thermique (E) un vilebrequin (51) est entraîné en rotation antagoniste vers une position prédéterminée par un moteur électrique (70) pour un entraînement en rotation normale ou en rotation antagoniste, comprenant
une unité de commande du retour au temps de démarrage d'arrêt au ralenti (100) exerçant une commande de retour dans laquelle immédiatement après l'arrêt du moteur thermique par la commande d'arrêt au ralenti, la commande de retour est exercée pour entraîner en rotation antagoniste le vilebrequin (51) vers la position prédéterminée,
dans lequel l'unité de commande du retour au temps de démarrage d'arrêt au ralenti (100) comprend des moyens de commande de l'entraînement en rotation antagoniste (101) pour entraîner en rotation antagoniste le moteur électrique (70) à un rapport de service de commande du retour immédiatement après l'arrêt du moteur thermique ;
des moyens de détermination de la condition d'arrêt en rotation antagoniste (103) pour détecter que le vilebrequin (51) est retourné à la position prédéterminée par l'entraînement en rotation antagoniste ; et
des moyens de freinage du moteur électrique (104) pour appliquer une force de freinage au vilebrequin (51) par entraînement en rotation antagoniste du moteur électrique (70) lorsqu'il est détecté que le vilebrequin (51) est retourné à la position prédéterminée ;
les moyens de freinage du moteur électrique (104) sont configurés pour appliquer la force de freinage de manière progressive,
le système de commande de démarrage du moteur (80) comprend en outre un détecteur d'angle du moteur électrique (29) pour détecter un angle de rotation du moteur électrique (70) ;
**caractérisé en ce que**
les moyens de détermination de la condition d'arrêt en rotation antagoniste (103) déterminent que le vilebrequin (51) est retourné à la position prédéterminée s'il est déterminé que le vilebrequin (51) tourne en rotation normale à partir de la rotation antagoniste sur la base d'un état de passage d'un angle de rotation prédéterminé détecté par le détecteur d'angle du moteur électrique (29),
un rapport de service appliqué à la force de freinage est fixé à une valeur inférieure au rapport de service de la commande de retour, et
les moyens de freinage du moteur électrique (104) appliquent la force de freinage de manière progressive en utilisant une pluralité de rapports de service différents.

3. Système de commande du démarrage d'un moteur thermique selon les revendications 1 ou 2, dans lequel les moyens de freinage du moteur électrique (104) appliquent la force de freinage de manière progressive tout en réduisant la pluralité de rapports de service différents de manière progressive.

4. Système de commande du démarrage d'un moteur thermique selon l'une quelconque des revendications 1 à 3, dans lequel les moyens de freinage du moteur électrique appliquent la force de freinage de manière progressive en utilisant un premier rapport de service et un deuxième rapport de service inférieur au premier rapport de service.

5. Système de commande du démarrage d'un moteur thermique selon la revendication 4, dans lequel les moyens de freinage du moteur électrique (104) continuent la force de freinage au premier rapport de service pendant une première période de temps prédéterminée (T1) et continuent par la suite la force de freinage au deuxième rapport de service pendant une deuxième période de temps prédéterminée (T2).

6. Système de commande du démarrage d'un moteur thermique selon l'une quelconque des revendications 1 à 5, comprenant en outre
un détecteur du degré d'ouverture de l'étranglement (23) pour détecter un degré d'ouverture de l'étranglement ;
dans lequel la commande de retour implique l'entraînement en rotation antagoniste et la force de freinage ; et
l'unité de commande du retour au temps de démarrage d'arrêt au ralenti (100) redémarre le moteur thermique si une valeur de sortie du détecteur du degré d'ouverture de l'étranglement excède une valeur prédéterminée pendant la commande d'arrêt au ralenti, et même pendant l'application de la force de freinage, démarre l'entraînement en rotation normale du moteur électrique (70) pour redémarrer le moteur thermique (E) si une valeur de sortie du détecteur du degré d'ouverture de l'étranglement (23) excède la valeur prédéterminée.

7. Système de commande du démarrage d'un moteur thermique selon la revendication 6, dans lequel même pendant l'application de l'entraînement en rotation antagoniste, l'unité de commande du retour au temps de démarrage d'arrêt au ralenti (100) arrête l'entraînement en rotation antagoniste et démarre l'entraînement en rotation normale du moteur électrique (70) pour redémarrer le moteur thermique (E) si la vitesse de rotation du vilebrequin (51) excède une première valeur prédéterminée et une valeur de sortie du détecteur du degré d'ouverture de l'étranglement (23) excède une deuxième valeur prédéterminée.
